# EUROPEAN PATENT APPLICATION

(11) **EP 4 386 309 A1**
(43) Date of publication of application: **19.06.2024**
(21) Application number: 23214194.5
(22) Date of filing: 05.12.2023
(51) Int. Cl.: G01B 3/56

(54) **RAFTER SQUARE**

(30) Priority: 13.12.2022 US 202263387117 P; 01.11.2023 US 202318499566
(71) Applicant: Milwaukee Electric Tool Corporation, Brookfield, WI 53005 (US)
(72) Inventor: THONI, Mark A., Pewaukee, 53072 (US)
(74) Representative: Barker Brettell LLP

(57) **Abstract**

A rafter square is provided. The rafter square includes a first outer edge, a second outer edge and an angled edge that extends between and connects the first outer edge and the second outer edge. The rafter square includes a plurality of scribe holes with each scribe hole having at least one scribe notch. The scribe notches are sized and/or shaped to receive a variety of marking instruments (e.g., a mechanical pencil, carpenter's pencil, etc.) of various sizes for use with the rafter square.

## Description

### CROSS-REFERENCE TO RELATED PATENT APPLICATION

The present application claims the benefit of and priority to U.S. Provisional Application No. 63/387,117 filed on December 13, 2022, which is incorporated herein by reference in its entirety.

### BACKGROUND OF THE INVENTION

The present invention relates generally to the field of tools. The present invention relates specifically to a marking tool such as a rafter square. In general, a rafter square is a tool used by carpenters or builders to make measurements, mark lines, and/or guide angled cuts, etc.

### SUMMARY OF THE INVENTION

One embodiment of the invention relates to a rafter square. The rafter square includes a body having a first outer edge, a second outer edge and an angled edge that extends between and connects the first outer edge and the second outer edge. The rafter square includes a plurality of scribe holes that extend through the body. Each of the plurality of scribe holes includes a body section and at least one scribe notch. Each of the at least one scribe notches has a first height and the body section has a second height. The second height is greater than the first height.

Another embodiment of the invention relates to a rafter square. The rafter square includes a body having a first outer edge, a second outer edge and an angled edge that extends between and connects the first outer edge and the second outer edge. The rafter square includes a plurality of scribe holes that extend through the body. Each of the plurality of scribe holes include a first scribe notch, a body section, and a second scribe notch on an opposite side of the body section from the first scribe notch. The first scribe notch extends toward the second outer edge and the second scribe notch extends toward the angled edge.

Another embodiment of the invention relates to a rafter square. The rafter square includes a body having a first outer edge, a second outer edge and an angled edge that extends between and connects the first outer edge and the second outer edge. The rafter square further includes a marking scale extending along the second outer edge. The marking scale includes a plurality of measurement indicia. The rafter square includes a plurality of scribe holes that extend through the body. Each of the plurality of scribe holes includes a body section and a scribe notch connected to the body section. The scribe notch includes a first linear portion, a curved portion, and a second linear portion. The curved portion faces inward toward the body section. The second linear portion extends in a parallel orientation to the linear portion. Each scribe notch is positioned to align with the measurement indicia.

Additional features and advantages will be set forth in the detailed description which follows, and, in part, will be readily apparent to those skilled in the art from the description or recognized by practicing the embodiments as described in the written description and claims hereof, as well as the appended drawings. It is to be understood that both the foregoing general description and the following detailed description are exemplary.

The accompanying drawings are included to provide further understanding and are incorporated in and constitute a part of this specification. The drawings illustrate one or more embodiments and, together with the description, serve to explain principles and operation of the various embodiments.

### BRIEF DESCRIPTION OF THE DRAWINGS

This application will become more fully understood from the following detailed description, taken in conjunction with the accompanying figures, wherein like reference numerals refer to like elements in which:
FIG. 1 is a top view of a rafter square, according to an exemplary embodiment.
FIG. 2 is a detailed top view of a notched section of the rafter square of FIG. 1, according to an exemplary embodiment.
FIG. 3 is a detailed top view of openings of the rafter square of FIG. 1, according to an exemplary embodiment.

### DETAILED DESCRIPTION

Referring generally to the figures, a marking tool, shown as a rafter square is shown according to an exemplary embodiment. The rafter square includes a series of measuring indicia and a plurality of notches or scribe notches along at least one side. In contrast to conventional rafter squares, the rafter square discussed herein includes a plurality of scribe notches having a size and/or shape designed to receive and fit a large marking instrument such as a carpenter's pencil and/or a small marking instrument such as a mechanical pencil. As will be generally understood, a carpenter's pencils have large bodies and/or tips to provide for easier grip and produce thick markings that can be necessary to mark rough surfaces while mechanical pencils can be used for thin or precise markings. Applicant believes when a scribe notch is large and a small marking instrument (i.e., mechanical pencil) is used, the small marking instrument has a lot of room to move around resulting in less precise markings (i.e., marking instrument will slip and not produce accurate line or mark). If a scribe notch is small, then a larger marking instrument (i.e., carpenter's pencil) does not fit within the scribe notch and is unable to be used for marking with the rafter square.

Applicant believes the notch design discussed herein allows a small or large marking instrument to be used in scribing in multiple directions (i.e., right, or left). Designing a notch compatible with multiple sizes of a marking instruments reduces the number of tools/markers a worker needs to carry and/or interact with, thereby increasing the efficiency of the worker. Similarly, the increased compatibility with marking instruments is useful for carpenters and/or builders who work in environments where it may be difficult or inconvenient to carry around more than one marking tool (i.e., rafter square with large notches for use with carpenter's pencil, rafter square with small notches for use with mechanical pencil). Applicant believes the notch design discussed herein improves the likelihood that a user creates more precise (i.e., consistent and/or linear) marks and/or lines with marking instruments of various sizes.

Further, in contrast to rafter squares that include a single elongated aperture with a plurality of scribe notches, the design discussed herein includes discrete or individual scribe holes or apertures. Applicant believes individual scribe holes are more secure (i.e., reduced likelihood of marking instrument slipping within an individual scribe hole compared to an aperture with numerous scribe notches).

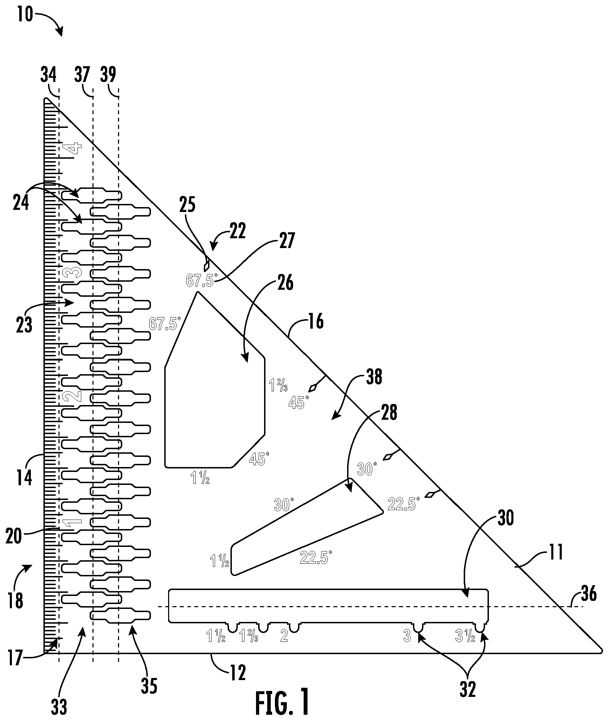

Referring to FIG. 1, a marking tool, shown as a rafter square 10 is shown. Rafter square 10 includes a body 13 having a first outer edge 12, a second outer edge 14, and an angled edge 16 that extends at an angle between and connects first outer edge 12 and second outer edge 14. In other words, the first outer edge 12, second outer edge 14, and angled edge 16 together define body 13 of rafter square 10. First outer edge 12 is joined to second outer edge 14 at a corner section 17 of rafter square 10. First outer edge 12 extends in a generally perpendicular (i.e., 90 degrees plus or minus 10 degrees) orientation to second outer edge 14. In a specific embodiment, first outer edge 12 intersects second outer edge 14 at a 90 degree angle at corner section 17. In such an embodiment, rafter square 10 forms a right triangle. In other words, angled edge 16 forms a hypotenuse of rafter square 10 and rafter square has a triangular shape.

First outer edge 12 extends along and is generally parallel (i.e., parallel plus or minus 10 degrees) to a first edge axis 36. Second outer edge 14 extends along and is parallel to a second edge axis 34. First edge axis 36 extends in a generally perpendicular (i.e., 90 degrees plus or minus 10 degrees) orientation to second edge axis 34. In a specific embodiment, rafter square 10 is formed from a metal material. In a specific embodiment, rafter square 10 is formed from aluminum.

In the illustrated embodiment, a marking scale 18 extends along second outer edge 14. Marking scale 18 includes a plurality of measurement indicia shown as hash marks 20. In various other embodiments, the marking scale 18 may extend along first outer edge 12 and/or angled edge 16. In a specific embodiment, the marking scale 18 of rafter square 10 is in English units such as inches. In other embodiments, the marking scale 18 of rafter square 10 is in metric units (i.e., mm, cm, etc.). Measurement indicia 20 may be printed, etched, engraved, painted, etc. on at least one of an upper surface 11 and/or lower surface of rafter square 10 that opposes upper surface 11. In a specific embodiment, measurement indicia 20 is printed, etched, engraved, painted, etc. on both upper surface 11 and the opposing lower surface of rafter square 10. In various other embodiments, measurement indicia 20 is only on upper surface 11 or the lower surface of rafter square 10.

Extending along angled edge 16 is an angled portion 38 of rafter square 10. Angled portion 38 includes one or more degree markings such as degree marking 22. Degree marking 22 includes an angled hash mark 25 extending inward (i.e., toward first outer edge 12 and/or second outer edge 14) from and at an angle relative to angled edge 16 and a label 27 indicating the angle of the angled hash mark 25. In a specific embodiment, angled hash mark 25 of degree marking 22 extends at an angle of 67.5 degrees relative to angled edge 16.

Rafter square 10 further includes a scribe notch portion 23. Scribe notch portion 23 is positioned above (i.e., in orientation shown in FIG. 1) corner section 17. In the illustrated embodiment, scribe notch portion 23 extends generally along second outer edge 14. In various other embodiments, when the marking scale 18 extend along first outer edge 12 and/or angled edge 16, the scribe notch portion will correspondingly be moved to be adjacent to the marking scale 18.

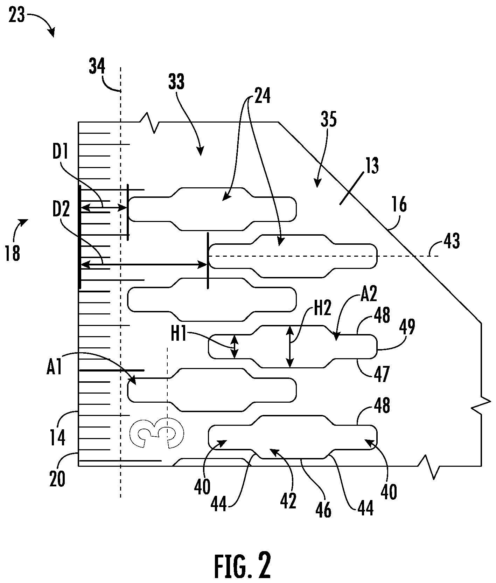

Scribe notch portion 23 includes a plurality of discrete scribe holes or apertures 24 that are defined within and extend through rafter square 10. As discussed above, Applicant believes the use of individual scribe holes are more secure than conventional rafter squares that include numerous scribe notches all positioned along a single aperture. Scribe holes 24 extend in a generally parallel orientation (i.e., parallel plus or minus 10 degrees) to first outer edge 12. In other words, a major axis of a scribe hole 24 is perpendicular to second outer edge 14 (see e.g., FIG. 2).

Rafter square 10 and specifically upper surface 11 includes openings and/or slots (e.g., 26, 28, 30) that extend through rafter square 10. The opening and/or slots (e.g., 26, 28, 30) are sized and/or dimensioned to receive a marking instrument and to provide additional assistance measuring and/or marking a workpiece. Specifically, rafter square 10 includes an opening, shown as a polygonal opening 26. Polygonal opening 26 is defined by a number of internal edges. In a specific embodiment, polygonal opening 26 has a hexagonal shape. In another specific embodiment, polygonal opening 26 is shaped as an irregular hexagon. In various other embodiments, polygonal opening 26 may have a different number of internal edges or sides (i.e., 4, 5, 7, 8, etc.).

Rafter square 10 includes another opening 28 different from polygonal opening 26. In a specific embodiment, opening 28 is has a quadrilateral shape. Opening 28 is defined by a number of internal edges. In another specific embodiment, opening 28 is shaped as an irregular quadrilateral. In various other embodiments, opening 28 may have a different number of internal edges or sides (i.e., 5, 6, 7, 8, etc.).

Rafter square 10 and specifically upper surface 11 includes a slot 30. Slot 30 extends along first edge axis 36 and has a parallel orientation to first outer edge 12. In other words, slot 30 extends along at least a portion of first outer edge 12. In a specific embodiment, slot 30 is a quadrilateral with a generally rectangular shape. Slot 30 includes one or more notches 32 allowing for precise markings at desired locations within slot 30.

Referring to FIG. 2, a detailed top view of a section of the scribe notch portion 23 is shown, according to an exemplary embodiment. Scribe holes 24 extend in a generally parallel orientation (i.e., parallel plus or minus 10 degrees) to first edge axis 36. Each scribe hole 24 includes at least one scribe notch 40 and a body section 42 connected to scribe notch 40. In a specific embodiment, a pair of scribe notches 40 are positioned on opposing sides of body section 42. In such an embodiment, a marking instrument can be used in scribing in multiple directions (i.e., right, or left in orientation shown in FIG. 2) depending on which of the scribe notches 40 is in use and with marking instruments of different sizes. In other words, each of the at least one scribe notches 40 includes a notch edge configured to receive and engage a first marking instrument having a first tip size and a second marking instrument having a second tip size. In such an embodiment, the first tip size is different than the second tip size.

As shown in FIGS. 1-2, the plurality of scribe holes 24 are arranged in a staggered position (i.e., some closer to second outer edge 14 and some further inward away from second outer edge 14). Specifically, scribe holes 24 are positioned in a first column 33 in which all scribe holes 24 in the first column 33 are aligned and extend along and in a parallel orientation to second edge axis 34. A first column axis 37 extends in a parallel orientation to second edge axis 34. The scribe holes 24 in first column 33 are symmetrical about first column axis 37. In various embodiments, each of the plurality of scribe holes 24 are the same. In such an embodiment, the scribe holes 24 have the same size, shape, dimensions, etc.

A second column 35 includes a plurality of scribe holes 24 that are aligned with each other and extend along and in a parallel orientation to second edge axis 34. A second column axis 39 extends in a parallel orientation to second edge axis 34 and first column axis 37. The scribe holes 24 in second column 35 are symmetrical about second column axis 39. Second column 35 is positioned inward (i.e., closer to angled edge 16) relative to first column 33. Scribe holes 24 and specifically scribe notches 40 are positioned to align with measurement indicia 20. In a specific embodiment, scribe notches 40 are positioned at every 1/8 of a measurement unit (i.e., every 1/8 inch, etc.). In various other embodiments, scribe holes 24 and scribe notches 40 may be positioned and/or spaced differently (i.e., every 1/4 unit, every 1/2 unit, etc.).

The last or bottom scribe hole 24 (in the orientation shown in FIGS. 1-2) in second column 35 is closer to first outer edge 12 than the last or bottom scribe hole 24 in the first column 33. In other words, a distance defined between the last scribe hole 24 in second column 35 and first outer edge 12 is less than a distance defined between the last scribe hole 24 in first column 33 and first outer edge 12. In a specific embodiment, first column 33 includes a number of scribe holes 24 that is the same as a number of scribe holes 24 in second column 35. In a specific embodiment, first column 33 and second column 35 each include 14 scribe holes 24.

A position of the scribe holes 24 in the first column 33 is defined by a first distance D1. D1 is defined as the distance between second outer edge 14 and an outermost point (i.e., closest to second outer edge 14) of the scribe notch 40 adjacent to second outer edge 14.

Similarly, a position of the scribe holes 24 in the second column 35 is defined by a second distance D2. D2 is defined as the distance between second outer edge 14 and an outermost point (i.e., closest to second outer edge 14) of the scribe notch 40 in the second column 35 and adjacent to second outer edge 14. In a specific embodiment, D2 is different than D 1. In a specific embodiment, D2 is greater than D 1.

Each scribe hole 24 is defined by a number of internal edges and includes a wide central portion (i.e., body section 42) and narrower end portions (scribe notches 40). Body section 42 includes a pair of angled edges 44 that are angled relative to first edge axis 36 and/or first outer edge 12 and a connecting edge 46 positioned between the pair of angled edges 44 and extending in a parallel orientation to first edge axis 36 and/or first outer edge 12. In other words, the pair of angled edges 44 and connecting edge 46 have a shape that is a trapezoid or half a hexagon. At least one of the pair of angled edges 44 is connected to a scribe notch 40.

When there is a pair of opposing scribe notches 40, each of the angled edges 44 is connected to a scribe notch 40. In such an embodiment, a first scribe notch 40 of the scribe hole 24 extends toward the second outer edge 14 and a second opposing scribe notch 40 extends toward the angled edge 16. In such an embodiment, a first edge of the first scribe notch 40 provides a guide for marking in a first direction (i.e., toward second outer edge 14) and the second scribe notch 40 provides a guide for marking in a second direction (i.e., toward angled edge 16). In other words, the edges of scribe notch 40 provide a support and/or interface against a marking instrument when a user marks a work piece. A major or longitudinal axis 43 of scribe holes 24 extends in a perpendicular direction to second outer edge 14.

Each scribe notch 40 is defined by a continuous edge 48 that includes a first linear portion 47 that extends in a parallel orientation to connecting edge 46, then includes a concave or curved portion 49 (facing inward toward body section 42) before extending into a second linear portion 47. The first and second linear portions 47 of continuous edge 48 are parallel to each other and spaced a distance apart (i.e., are not colinear). The second linear portion 47 of each scribe notch 40 is connected to another portion of body section 42 and specifically an angled edge 44. Another connecting edge 46 extends between and connects a second pair of the angled edges 44.

Scribe notch 40 includes a dimension, shown as a first height, H1 (in the frame of reference shown in FIG. 2). H1 is defined between the first and second linear portions 47. Body section 42 includes a dimension, shown as a second height, H2 (in the frame of reference shown in FIG. 2). H2 is defined between connecting edges 46. In a specific embodiment, H2 is greater than H1. In other words, each of the scribe notches 40 has a first height and the body section 42 has a second height, with the second height being greater than the first height. In another specific embodiment, H2 is at least 1.5 times H1. In various specific embodiments, H2 is at least 1.6 times H1, and specifically H2 is at least 1.7 times H1, and more specifically H2 is at least 1.75 times H1.

When major axis 43 of scribe hole 24 extends through a center of scribe hole 24, scribe hole 24, scribe notch 40 and body section 42 are bisected by major axis 43. In other words, a top portion of scribe hole 24 at least partially defined by the bisecting major axis 43 has a size that is the same as a size of a bottom portion of scribe hole 24 at least partially defined by the bisecting major axis 43 (i.e., scribe hole 24 is symmetrical about major axis 43).

As previously discussed, Applicant believes the scribe notches 40 having a size and/or shape designed to receive and fit a large marking instrument such as a carpenter's pencil and/or a small marking instrument such as a mechanical pencil improves precision of the mark and also improves efficiency (i.e., do not need to find and/or carry another rafter square or various marking instruments). As is generally understood, if a scribe notch is large, then smaller marking instruments (i.e., mechanical pencils) have a lot of room to move around and are, therefore, less precise when used for marking (i.e., marking instrument will slip and not produce accurate line or mark). On the other hand, if a scribe notch is small, then larger marking instruments (i.e., carpenter's pencils) do not fit within the scribe notch and are, therefore, unable to be used for marking with the rafter square.

Each scribe notch 40 is sized and/or dimensioned to receive a large marking instrument and a small marking instrument such that a user can make an accurate and/or precise (i.e., clear line made with less likelihood of slipping) mark using marking instruments of various sizes. In a specific embodiment, each scribe notch 40 is sized and/or dimensioned to receive a first marking instrument having a first tip size and a second marking instrument having a second tip size. In a specific embodiment, the first tip size is different than the second tip size. In a specific embodiment, the first tip size is less than the second tip size.

The scribe notch 40 extends outward (i.e., away toward second outer edge 14 or angled edge 16) from body section 42 of scribe hole 24. When there are a pair of scribe notches 40 that are positioned on opposing sides of body section 42, the scribe notches 40 extend in opposite directions (i.e., one toward second outer edge 14 and the other toward angled edge 16).

In a specific embodiment, an area, A1 of each scribe notch 40 is defined by continuous edge 48 between the first and second linear portions 47 and curved portion 49 such that the area is bounded by end points of the adjacent angled edges 44. A total area, A2 of each scribe hole 24 includes the area of body section 42 and the pair of opposing scribe notches 40. In a specific embodiment, A2 is greater than A1.

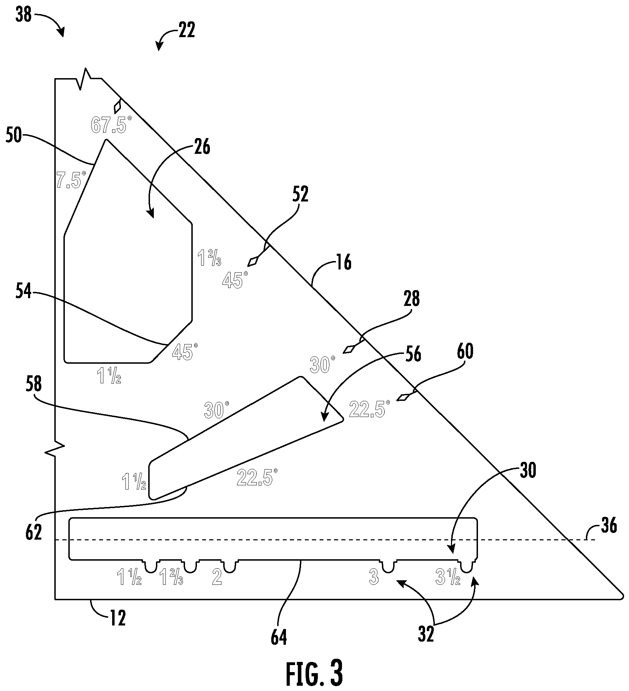

Referring to FIG. 3, a detailed top view of the angled portion 38 of rafter square 10 is shown, according to an exemplary embodiment. Polygonal opening 26 includes a first internal edge 50 aligned with degree marking 22 and/or angled hash mark 25. When a user wants to mark the workpiece at the specific angle corresponding to degree marking 22, first internal edge 50 can act as guide for drawing a precise mark or line.

Angled portion 38 includes a second degree marking 52. Degree marking 52 is substantially the same as degree marking 22 except for the differences discussed herein (i.e., includes an angled hash mark extending inward and a label indicating the angle of the angled hash mark). In a specific embodiment, second degree marking 52 includes angled hash mark that extends at an angle of 45 degrees. Polygonal opening 26 includes a second internal edge 54 aligned with second degree marking 52 and/or the angled hash mark of second degree marking 52. When a user wants to mark the workpiece at the specific angle corresponding to degree marking 52, second internal edge 54 can act as guide for drawing a precise mark or line.

Angled portion 38 includes a third degree marking 56 and a fourth degree marking 60. Third and fourth degree markings 56, 60 are substantially the same as degree markings 22, 52 except for the differences discussed herein. In a specific embodiment, third degree marking 56 includes angled hash mark that extends at an angle of 30 degrees. Opening 28 includes a first internal edge 58 aligned with third degree marking 56 and/or the angled hash mark of third degree marking 56. In a specific embodiment, fourth degree marking 60 includes angled hash mark that extends at an angle of 22.5 degrees. Opening 28 includes a second internal edge 62 aligned with fourth degree marking 60 and/or the angled hash mark of fourth degree marking 60.

As previously noted, slot 30 extends along first edge axis 36 in a generally parallel orientation (i.e., parallel plus or minus 10 degrees) to first outer edge 12. Slot 30 includes an internal edge 64 extending at least partially along first edge axis 36 in a generally parallel orientation to first outer edge 12. In a specific embodiment, internal edge 64 is a continuous internal edge. One or more notches 32 are defined within internal edge 64. Notches 32 are positioned along internal edge 64 of slot 30 to provide additional options for measuring and/or marking a workpiece.

It should be understood that the figures illustrate the exemplary embodiments in detail, and it should be understood that the present application is not limited to the details or methodology set forth in the description or illustrated in the figures. It should also be understood that the terminology is for the purpose of description only and should not be regarded as limiting.

Further modifications and alternative embodiments of various aspects of the invention will be apparent to those skilled in the art in view of this description. Accordingly, this description is to be construed as illustrative only. The construction and arrangements, shown in the various exemplary embodiments, are illustrative only. Although only a few embodiments have been described in detail in this disclosure, many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Some elements shown as integrally formed may be constructed of multiple parts or elements, the position of elements may be reversed or otherwise varied, and the nature or number of discrete elements or positions may be altered or varied. The order or sequence of any process, logical algorithm, or method steps may be varied or re-sequenced according to alternative embodiments. Other substitutions, modifications, changes and omissions may also be made in the design, operating conditions and arrangement of the various exemplary embodiments without departing from the scope of the present invention.

For purposes of this disclosure, the term "coupled" means the joining of two components directly or indirectly to one another. Such joining may be stationary in nature or movable in nature. Such joining may be achieved with the two members and any additional intermediate members being integrally formed as a single unitary body with one another or with the two members or the two members and any additional member being attached to one another. Such joining may be permanent in nature or alternatively may be removable or releasable in nature.

While the current application recites particular combinations of features in the claims appended hereto, various embodiments of the invention relate to any combination of any of the features described herein whether or not such combination is currently claimed, and any such combination of features may be claimed in this or future applications. Any of the features, elements, or components of any of the exemplary embodiments discussed above may be used alone or in combination with any of the features, elements, or components of any of the other embodiments discussed above.

In various exemplary embodiments, the relative dimensions, including angles, lengths and radii, as shown in the Figures are to scale. Actual measurements of the Figures will disclose relative dimensions, angles and proportions of the various exemplary embodiments. Various exemplary embodiments extend to various ranges around the absolute and relative dimensions, angles and proportions that may be determined from the Figures. Various exemplary embodiments include any combination of one or more relative dimensions or angles that may be determined from the Figures. Further, actual dimensions not expressly set out in this description can be determined by using the ratios of dimensions measured in the Figures in combination with the express dimensions set out in this description.

## Claims

1. A rafter square comprising:
a body comprising:
a first outer edge;
a second outer edge;
an angled edge that extends between and connects the first outer edge and the second outer edge;
a plurality of scribe holes that extend through the body, each of the plurality of scribe holes comprising a body section and at least one scribe notch;
wherein each of the at least one scribe notches has a first height and the body section has a second height, and wherein the second height is greater than the first height.

2. The rafter square of claim 1, wherein the second height is at least 1.5 times the first height.

3. The rafter square of claim 1, wherein each of the at least one scribe notches includes a notch edge configured to receive and engage a first marking instrument having a first tip size and a second marking instrument having a second tip size, and wherein the first tip size is different than the second tip size.

4. The rafter square of claim 1, wherein a major axis of each of the plurality of scribe holes is perpendicular to the second outer edge.

5. The rafter square of claim 1, further comprising:
a first edge axis extending along the first outer edge; and
a second edge axis extending along the second outer edge.

6. The rafter square of claim 5, wherein at least a portion of the plurality of scribe holes are arranged in a first column, and wherein the plurality of scribe holes in the first column are aligned and positioned along the second edge axis.

7. The rafter square of claim 6, wherein at least a portion of the plurality of scribe holes are arranged in a second column, and wherein the plurality of scribe holes in the second column are aligned and positioned along the second edge axis.

8. The rafter square of claim 7, wherein the first column is a first distance from the second outer edge and the second column is a second distance from the second outer edge, and wherein the second distance is greater than the first distance.

9. The rafter square of claim 1, further comprising a marking scale extending along the second outer edge.

10. The rafter square of claim 1, wherein each of the plurality of scribe holes is the same as each of the other plurality of scribe holes.

11. A rafter square comprising:
a body comprising:
a first outer edge;
a second outer edge;
an angled edge that extends between and connects the first outer edge and the second outer edge;
a plurality of scribe holes that extend through the body, each of the plurality of scribe holes comprising:
a first scribe notch;
a body section; and
a second scribe notch on an opposite side of the body section from the first scribe notch;
wherein the first scribe notch of each of the plurality of scribe holes extends toward the second outer edge and wherein the second scribe notch of each of the plurality of scribe holes extends toward the angled edge.

12. The rafter square of claim 11, wherein a first edge of the first scribe notch provides a guide for marking in a first direction and wherein a second edge of the second scribe notch provides a guide for marking in a second direction.

13. The rafter square of claim 11, wherein each of the plurality of scribe holes is symmetrical about a major axis of each scribe hole.

14. The rafter square of claim 11, wherein the plurality of scribe holes are arranged in a first column and a second column, the first column and second column both extending along the second outer edge.

15. The rafter square of claim 14, wherein the scribe holes in the second column are staggered relative to the scribe holes in the first column such that the scribe holes in the second column are positioned between adjacent scribe holes in the first column.

16. A rafter square comprising:
a body comprising:
a first outer edge;
a second outer edge;
an angled edge that extends between and connects the first outer edge and the second outer edge;
a marking scale extending along the second outer edge, the marking scale comprising a plurality of measurement indicia;
a plurality of scribe holes that extend through the body, the plurality of scribe holes each comprising:
a body section; and
a scribe notch connected to the body section, the scribe notch comprising:
a first linear portion;
a curved portion, the curved portion facing inward toward the body section; and
a second linear portion extending in a parallel orientation to the first linear portion;
wherein each scribe notch is positioned to align with the measurement indicia.

17. The rafter square of claim 16, wherein each scribe notch includes a notch edge sized to receive and engage a first marking instrument having a first tip size and a second marking instrument having a second tip size.

18. The rafter square of claim 16, further comprising a degree marking extending inward from the angled edge and at an angle relative to the angled edge.

19. The rafter square of claim 18, further comprising a polygonal opening extending through the body of the rafter square, the polygonal opening including an internal edge aligned with the degree marking.

20. The rafter square of claim 16, wherein the plurality of scribe holes are arranged in a first column and a second column, the first column and second column each extending along the second outer edge of the rafter square.
